# EUROPÄISCHE PATENTANMELDUNG

(11) **EP 2 605 212 A2**
(43) Veröffentlichungstag der Anmeldung: **19.06.2013**
(21) Anmeldenummer: 12007833.2
(22) Anmeldetag: 20.11.2012
(51) Int. Cl.: G06T 7/00

(54) **Verfahren und Vorrichtung zum optischen Prüfen von bei der Herstellung und/oder Verpackung von Zigaretten zu prüfenden Objekten**

(30) Priorität: 12.12.2011 DE 102011120721
(71) Anmelder: Focke & Co. (GmbH & Co. KG), 27283 Verden (DE)
(72) Erfinder: Kral, Vincent, 28203 Bremen (DE)
(74) Vertreter: Aulich, Martin

(57) **Zusammenfassung**

Die Erfindung betrifft eine Verfahren zum optischen Prüfen von bei der Herstellung und/oder Verpackung von Zigaretten zu prüfenden Objekten - Prüfobjekte -, insbesondere von Zigarettenpackungen (10) und/oder Zuschnitten für Zigarettenpackungen und/oder Aufdrucken und/oder Druckträgern auf oder für Zigarettenpackungen, bei dem mittels eines Prüforgans (11), bevorzugt einer Kamera, ein elektronisches Bild mindestens eines Prüfobjektes (10) aufgenommen wird, und bei dem zwischen dem aufgenommenem Bild und einem hinterlegten Referenzbild ein Differenzbild gebildet wird, wobei Bildinformationen des Differenzbildes im Hinblick auf Fehler des Prüfobjektes (10) ausgewertet werden. Die Erfindung ist dadurch gekennzeichnet, dass im Rahmen der Auswertung des Differenzbildes in mindestens einem Bildbereich des Differenzbildes eine vorzugsweise positionsabhängige Gewichtung der Bildinformationen dieses Bildbereichs erfolgt.

## Beschreibung

Die Erfindung betrifft ein Verfahren zum optischen Prüfen von bei der Herstellung und/oder Verpackung zu prüfenden Objekten - Prüfobjekte -, insbesondere von Zigarettenpackungen und/oder Zuschnitten für Zigarettenpackungen und/oder Aufdrucken und/oder Druckträgern auf oder für Zigarettenpackungen, bei dem mittels eines Prüforgans, bevorzugt einer Kamera, ein elektronisches Bild mindestens eines Prüfobjektes aufgenommen wird, und bei dem zwischen dem aufgenommenen Bild und einem hinterlegten Referenzbild ein Differenzbild gebildet wird, wobei Bildinformationen des Differenzbildes im Hinblick auf Fehler des Prüfobjektes ausgewertet werden. Die Erfindung betrifft des Weiteren eine Vorrichtung zur Durchführung eines solchen Verfahrens.

Zigarettenverpackungen werden während des Produktionsprozesses unter anderem mit geeigneten optischen Prüfvorrichtungen geprüft. Solche Prüfvorrichtungen umfassen in der Regel ein oder mehrere Kameras, die Bilder von den Packungen aufnehmen und mittels geeigneter optischer Prüfungsverfahren Packungsfehler erkennen.

Schwierigkeiten kann die Auswertung der Differenzbilder bereiten. Dies insbesondere dann, wenn die Position von Packungselementen, beispielsweise von Packungsaufdrucken, relativ zum übrigen Teil der jeweiligen Packung von Packung zu Packung variieren kann. In einem solchen Fall weist das Differenzbild Differenzbildobjekte auf, die auf die variierende Position des entsprechenden Packungselements zurückzuführen sind, nicht aber auf Packungsfehler. Diese Differenzbildobjekte werden von der Auswertelogik allerdings in der Regel ungewollt dennoch als Packungsfehler klassifiziert.

Es ist Aufgabe der vorliegenden Erfindung, ein Verfahren und eine Vorrichtung der eingangs genannten Art weiterzuentwickeln, insbesondere im Hinblick auf eine möglichst präzise Auswertung der Differenzbilder. Dies insbesondere auch dann, wenn die Positionen von Prüfobjektelementen von Prüfobjekt zu Prüfobjekt variieren können.

Die Aufgabe wird gelöst durch ein Verfahren mit den Merkmalen des Anspruchs 1 sowie eine Vorrichtung mit den Merkmalen des Anspruchs 8.

Es wird entsprechend ein Verfahren zum optischen Prüfen von bei der Herstellung und/oder Verpackung von Zigaretten zu prüfenden Prüfobjekten angegeben, wie etwa von Zigarettenpackungen und/oder Zuschnitten für Zigarettenpackungen und/oder Aufdrucken und/oder Druckträgern auf oder für Zigarettenpackungen, bei dem mittels eines Prüforgans, bevorzugt einer Kamera, ein elektronisches Bild mindestens eines Prüfobjektes aufgenommen wird. Zwischen dem aufgenommenem Bild und einem hinterlegten Referenzbild wird ein Differenzbild gebildet. Bildinformationen des Differenzbildes werden im Hinblick auf Fehler des Prüfobjektes ausgewertet. In mindestens einem Bildbereich des Differenzbildes erfolgt im Rahmen der Auswertung desselben eine Gewichtung der Bildinformationen dieses Bildbereichs. Diese Gewichtung erfolgt dabei bevorzugt positionsabhängig, kann also innerhalb des Bereiches variieren.

Zur Durchführung der Prüfung werden die Prüfobjekte im Fertigungsprozess bevorzugt an dem Prüforgan vorbeigefördert. Die Bildaufnahmen werden dabei in der Regel bei relativ zu dem Prüforgan unbewegtem Prüfobjekt erstellt. Dies muss aber nicht so sein.

Eine geeignete Vorrichtung zur Durchführung eines derartigen Prüfverfahrens verfügt über ein Prüforgan, bevorzugt eine Kamera, mit dem ein solches elektronisches Bild des mindestens einen Prüfobjektes aufgenommen werden kann, und eine Auswerteeinrichtung, mit der die genannte Auswertung bevorzugt automatisch durchgeführt werden kann. Mit der oben genannten Gewichtung der Bildinformationen im Rahmen der Auswertung ist es beispielsweise möglich, bestimmte Differenzbildbereiche weniger stark zu beachten bzw. zu bewerten als andere Bereiche. So ist es beispielsweise möglich, Bildinformationen in bestimmten Bereichen gegenüber anderen Bereichen weniger stark zu gewichten.

So können Bereiche weniger stark gewichtet werden, in denen erwartet wird, dass die dort angeordneten Differenzbildobjekte auf auf dem Prüfobjekt angeordneten Bildobjekten beruhen - wie etwa alphanumerische oder bildliche Aufdrucke (Symbole, Graphiken) auf Zigarettenpackungen -, deren Positionen auf den Prüfobjekten sich bei einer Menge von zu prüfenden, gleichartigen Prüfobjekten produktionsbedingt von Prüfobjekt zu Prüfobjekt unterscheiden. Denn wenn in dieser Weise die Positionen von Bildobjekten innerhalb einer Menge von Prüfobjekten schwanken bzw. variieren, schwanken bzw. variieren diese Positionen natürlich auch in den zugeordneten realen bzw. Ist-Bildaufnahmen dieser Prüfobjekte. Dies führt dann zu entsprechenden, auf diese Schwankungen zurückzuführenden Differenzbildobjekten in den jeweiligen Differenzbildern, die jeweils aus diesen Ist-Bildaufnahmen und dem festen, hinterlegten Referenzbild ermittelt werden. Der Einfluss eines solchen Bereichs, in dem ein auf diese Schwankungen zurückzuführendes Differenzbildobjekt zu erwarten ist, auf das Auswertungsergebnis kann durch die erfindungsgemäße Gewichtung beeinflusst werden.

Hierdurch kann im Ergebnis erreicht werden, dass diese Bildinformationen in solchen Bereichen im Rahmen der Auswertung nicht ungewollt als Fehler klassifiziert werden.

Je nach Grad des Auftretens solcher in der Regel auf produktionsbedingte Schwankungen von Elementen der Prüfobjekte zurückzuführenden Differenzbildobjekte kann die Gewichtung der entsprechenden Bildinformationen in dem Differenzbildbereich vorgegeben werden.

Letztlich führen in dem oben genannten Beispiel demnach die Schwankungen der Positionen der Bildobjekte zu entsprechenden, statistisch erfassbaren Schwankungen von Bildinformationen in dem genannten Bereich, wie etwa von Helligkeitswerten und/oder Farbwerten einzelner Bildpunkte und/oder von Tiefeninformationen (3D) oder dergleichen mehr.

Solche statistisch erfassbaren Schwankungen der Bildinformationen können aber auch andere Ursachen haben als Positonsschwankungen von Bildobjekten des Prüfobjekts. So können Farben von Oberflächen des Prüfobjekts, etwa von Zigarettenpackungsoberflächen, produktionsbedingt von Prüfobjekt zu Prüfobjekt bzw. innerhalb einer Menge gleichartiger Prüfobjekte schwanken. Auch solche, gegebenenfalls ortsunabhängige Schwankungen, können erfindungsgemäß gewichtet werden, um deren Einfluss auf die Differenzbildauswertung zu reduzieren. Beispielsweise können Helligkeits- oder Farbwerte oder auch Tiefeninformationen (3D), die auf solche Schwankungen zurückzuführen sind, auf diese Art gewichtet werden.

Allgemein gesprochen werden erfindungsgemäß (wie auch immer ausgebildete) Bildinformationen innerhalb eines Bildbereich des Differenzbildes in besonderer Weise gewichtet, in dem Bildinformationen erwartet werden, die mindestens teilweise auf innerhalb einer Menge von gleichartigen Prüfobjekten auftretende, statistisch erfassbare, insbesondere produktionsbedingte Schwankungen zurückzuführen sind.

Der genannte Bildbereich ist dabei bevorzugt ein Teilbereich des Prüfobjekts. Es liegt dabei naturgemäß im Rahmen der Erfindung, nicht nur den genannten Bildbereich zu gewichten, sondern zusätzlich auch gegebenenfalls angrenzende und/oder andere, insbesondere sämtliche Differenzbildbereiche.

Theoretisch denkbar ist alternativ somit auch, dass dieser zu gewichtende Bereich kein Teilbereich ist, sondern identisch dem Prüfobjekt entspricht, beispielsweise einer zu prüfenden Packungsseite einer Zigarettenpackung. Im Ergebnis würden die Bildinformationen des gesamten, diesem Prüfobjekt zugeordneten Differenzbildes entsprechend gewichtet werden.

Vorzugsweise erfolgt die Gewichtung der Bildinformationen innerhalb des genannten Bereichs nach Maßgabe einer statistischen Verteilung. Insbesondere erfolgt die Gewichtung nach Maßgabe einer statistischen Verteilung der erwarteten Positionen mindestens eines in dem Bereich angeordneten, vorzugsweise aufgedruckten Differenzbildobjektes in dem Differenzbild. Bevorzugt erfolgt die Gewichtung der Bildinformationen dabei derart, dass die Bildinformationen an den Bildpositionen des genannten Bereichs, an denen das Differenzbildobjekt bzw. ein Teil desselben mit höherer Wahrscheinlichkeit auftritt, weniger stark gewichtet werden, als an den Positionen, an denen das Bildobjekt bzw. ein Teil desselben mit geringerer Wahrscheinlichkeit auftritt.

Bei der statistischen Verteilung kann es sich um eine Verteilung von Wahrscheinlichkeiten handeln, beispielsweise der vorgenannten erwarteten Positionen des Differenzbildobjekts.

Diese kann abgeleitet sein aus einer Häufigkeitsverteilung dieser Positionen. Eine solche Häufigkeitsverteilung kann bevorzugt automatisch ermittelt werden. Sie bezieht sich auf die Häufigkeit, mit der das Differenzbildobjekt in einer Menge von Differenzbildern an den jeweiligen Bildpositionen auftritt bzw. dort angeordnet ist.

Die Menge von Differenzbildern kann dabei auf einer gegebenenfalls automatisiert ablaufenden, empirischen Untersuchung einer Menge von Musterprüfobjekten basieren, beispielsweise von 50, 100 oder noch mehr Musterprüfobjekten. Diese Untersuchung kann beispielsweise zu Beginn bzw. vor Beginn eines Produktionsprozesses erfolgen, indem Musterprüfobjekte, bspw. Zuschnitte für Zigarettenpackungen, mit der Prüfvorrichtung im Rahmen eines separaten Untersuchungs- oder Einmessvorgangs vermessen werden.

Von jedem Musterprüfobjekt kann dabei mindestens eine Bildaufnahme gemacht werden und zwischen jeder Bildaufnahme des Musterprüfobjekts und dem Referenzbild ein entsprechendes Differenzbild erzeugt werden. Schließlich werden die Differenzbilder der auf diese Weise erzeugten Menge von Differenzbildern daraufhin untersucht, an welchen Bildpositionen das betrachtete Differenzbildobjekt jeweils auftritt. Des Weiteren wird für die so ermittelten Bildpositionen erfasst, in jeweils welcher Anzahl von Differenzbildern (Häufigkeit) die Differenzbildobjekte jeweils an den ermittelten Positionen angeordnet sind.

Aus einer solchen Häufigkeitsverteilung wird dann im Rahmen der Auswertung des Differenzbildes (oder vorher) zweckmäßigerweiser die oben entsprechende Wahrscheinlichkeitsverteilung ermittelt, die unmittelbar die entsprechenden Wahrscheinlichkeiten angibt, mit denen das Differenzbildobjekt eines Differenzbildes an einer der entsprechenden Positionen angeordnet ist.

In ähnlicher Weise kann auch das Referenzbild vorzugsweise automatisch ermittelt werden. Hierzu kann von jedem Musterprüfobjekt einer Menge von gleichartigen Musterprüfobjekten, insbesondere von mindestens 50, 100 oder mehr solcher Musterprüfobjekte, wenigstens ein Bild jedes Musterprüfobjektes aufgenommen werden. Aus der Menge von aufgenommen Bildern kann beispielsweise mittels eines geeigneten statistischen Auswerteverfahrens ein das Referenzbild bildendes Durchschnittsbild erzeugt werden.

Weitere Merkmale der vorliegenden Erfindung ergeben sich aus den beigefügten Patentansprüchen, aus der nachfolgenden Beschreibung eines bevorzugten Ausführungsbeispiels sowie aus den beigefügten Zeichnungen.

Darin zeigt:
- Fig. 1: eine schematische Darstellung eines Teils einer Verpackungsmaschine für Zigarettenpackungen mit Teilen einer Prüfvorrichtung zur optischen Prüfung von Prüfobjekten, insbesondere Packungen bzw. Packungsseiten,
- Fig. 2: ein Referenzbild einer Vorderseite einer Zigarettenpackung,
- Fig. 3: ein reales bzw. tatsächliches Bild einer Packungsvorderseite, das mit der Prüfvorrichtung aufgenommen wurde,
- Fig. 4: ein Differenzbild, das sich durch Subtraktion des aufgenommenen Bildes von dem Referenzbild ergeben hat,
- Fig. 5: ein Referenzbild, ein aufgenommes Bild und ein aus diesen gebildetes Differenzbild eines vereinfachten Beispiels eines (anderen) Prüfobjektes,
- Fig. 6: eine Wahrscheinlichkeitsverteilung relativ zu einem Prüfobjekthintergrund schwankender Positionen eines auf dem Prüfobjekt gemäß Fig. 5 angeordneten Bildobjekts,
- Fig. 7: eine Wahrscheinlichkeitsverteilung der Positionen von zwei sich aus Subtraktion von Referenzbild und aufgenommenem Bild gemäß Fig. 5 ergebenden Differenzbildobjekten in einem entsprechenden Differenzbild,
- Fig. 8 bis Fig. 11: versinnbildlichende Diagramme zu Auswerteschritten, die im Rahmen eines Auswerteverfahrens zur Auswertung des Differenzbildes aus Fig. 7 verwendet werden.

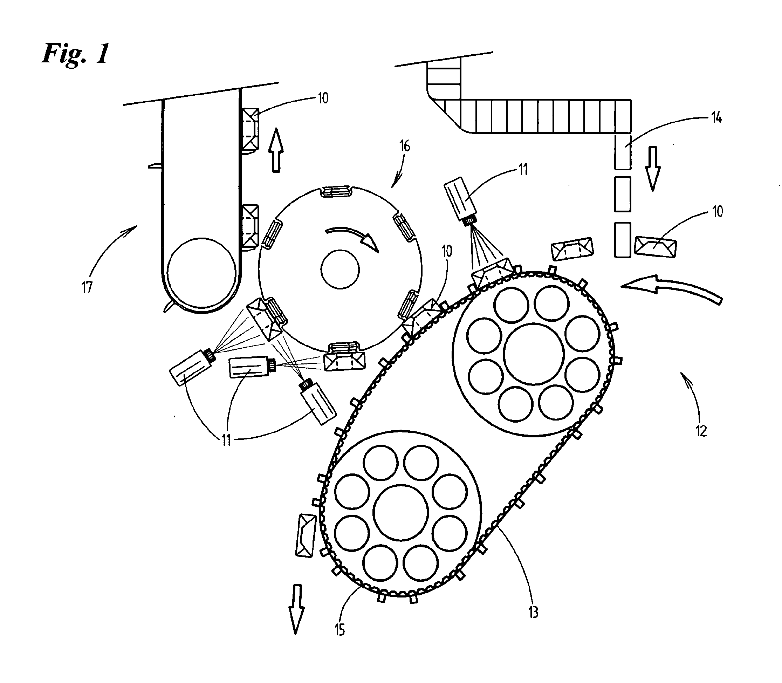

Fig. 1 zeigt beispielhaft Teile einer Vorrichtung zur Verpackung von Zigaretten 10. Im vorliegenden Fall handelt es sich um einen sogenannten Packer. Dieser kann Zigarettenpackungen 10 des Typs Weichbecher bzw. Weichpackungen herstellen.

Die Erfindung kann aber allgemein im Zusammenhang mit jeder Vorrichtung zur Herstellung und/oder Verpackung von Zigaretten angewendet werden. Es kommt daher weder auf die Art der verwendeten Maschinen an, noch auf die Art der herstellbaren Zigaretten bzw. Zigarettenpackungen.

Die schematische Darstellung zeigt einen Ausschnitt der Verpackungsmaschine, in dem die Prüfobjekte, beispielsweise Packungen 10 bzw. Teile derselben mittels einer Prüfvorrichtung optisch geprüft werden. Die Prüfvorrichtung verfügt unter anderem über elektrooptische Prüforgane 11, im vorliegenden Fall CCD-Kameras.

Die Prüforgane 11 erfassen vorliegend sämtliche Seiten der Zigarettenpackungen 10, auch wenn die Erfassung der Oberseiten und der Bodenseiten der Packungen nicht explizit dargestellt ist.

In dem in Fig. 1 dargestellten Bereich der Verpackungsmaschine sind die einzelnen Packungen 10 bereits weitgehend fertiggestellt und werden auf einem nur teilweise gezeigten Trockenrevolver 12 während eines längeren Zeitraums in der dargestellten Drehrichtung transportiert, damit Leimstellen der Packungen 10 abbinden können und das exakte Format der Packungen 10 dabei stabilisiert wird. Die Packungen 10 verlassen den Trockenrevolver 12 über eine Ausschleuseeinrichtung 13, die im vorliegenden Fall als Gurtförderer ausgebildet ist.

Einzelheiten zum Aufbau und zur Funktionsweise des Trockenrevolvers 12 und der Ausschleuseeinrichtung 13 können der EP 0 605 838 entnommen werden, auf die zum Zwecke der vollständigen Offenbarung Bezug genommen wird und deren Inhalt vollumfänglich zum Gegenstand der vorliegenden Anmeldung gemacht wird. Des Weiteren ist dieser Schrift auch die Zuführung von Banderolen 14 und deren Anbringung an den Packungen 10 zu entnehmen.

Die Packungen 10 werden vom Umfang eines Fördertrums 15 der Ausschleuseeinrichtung 13 durch eine Übergabeeinrichtung, im vorliegenden Fall ein drehend angetriebenes Ausschleuserad 16, abgenommen und direkt an einen aufrecht gerichteten Zigarettenförderer 17 übergeben. Das Ausschleuserad 16 ist in Einzelheiten in der EP 0 770 551 beschrieben, der Zigarettenförderer 17 in der EP 0 596 387. Auch auf diese Anmeldungen wird zum Zwecke der vollständigen Offenbarung Bezug genommen. Der Inhalt dieser Anmeldungen wird ebenfalls zum Gegenstand der vorliegenden Anmeldung gemacht.

Wie teilweise zu erkennen ist, ist zur Prüfung der Packungen 10 jeweils eine Packungsseite der Packung 10 jeweils einem Prüforgan 11 zugeordnet.

Die von dem jeweiligen Prüforgan 11 der Prüfvorrichtung aufgenommenen Bilder werden in einer nicht dargestellten Auswerteeinrichtung der Prüfvorrichtung automatisch analysiert. Die Analyse dient in der Regel vornehmlich der Erkennung von Fehlern der jeweils produzierten Packung. Fehlerhafte Packungen können dann in der Folge automatisch aus dem Produktionsprozess ausgeschleust werden.

Die Auswerteeinrichtung kann beispielsweise Teil der ebenfalls nicht dargestellten Steuerung bzw. Steuereinrichtung der Prüfvorrichtung sein, mit der unter anderem die einzelnen Prüforgane 11 gesteuert werden können. Die Auswerteeinrichtung kann natürlich auch eine separate Einheit sein, beispielsweise eine übliche Computereinrichtung mit entsprechender Bildauswerte- bzw. -analysesoftware zur Auswertung von mit den Prüforganen 11 aufgenommenen Bildern der Packungen 10 bzw. der jeweiligen Packungsseiten.

Mit optischen Prüfverfahren können viele Eigenschaften bzw. Merkmale der zu überprüfende Packungen 10 untersucht werden. Beispielsweise können Banderolen, Aufdrucke, Packungskanten oder dergleichen mehr auf Fehlerfreiheit untersucht werden. Auch kann geprüft werden, ob die Packungen verschmutzt sind, beispielsweise durch aufliegende Tabakkrümel. Der Fachmann weiß, welche Eigenschaften bzw. Merkmale sich für optische Prüfverfahren eignen.

Eine wichtige Besonderheit ist vorliegend die konkrete Auswertung der von den Prüforganen 11 aufgenommenen Bilder der Zigarettenpackungen 10.

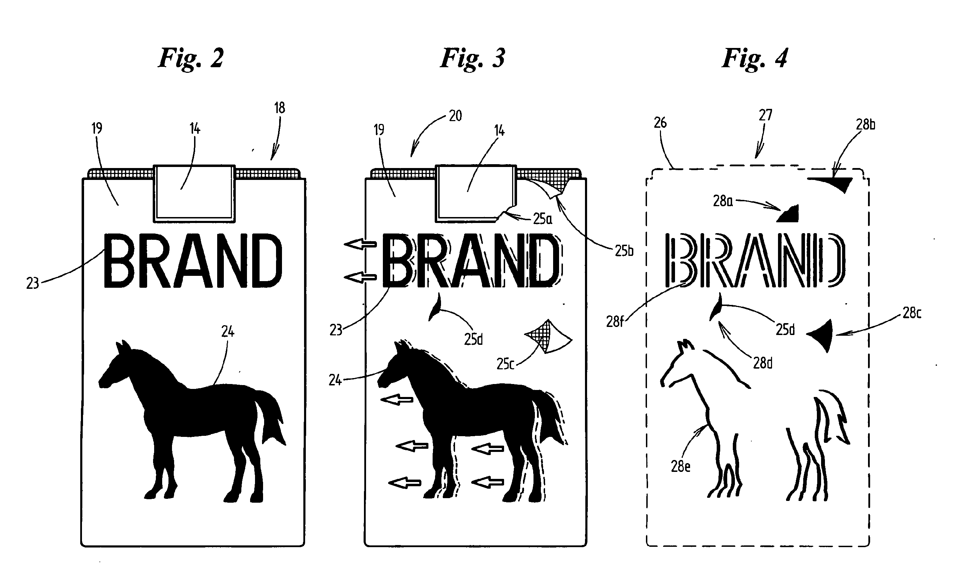

In der Fig. 2 ist beispielhaft ein Referenzbild 18 eines mit der Prüfvorrichtung zu untersuchenden Prüfobjektes gezeigt, nämlich vorliegend einer Vorderseite 19 einer Zigarettenpackung 10.

Tatsächlich von den jeweiligen Prüforganen 11 aufgenommene Bilder 20 solcher Vorderseiten 19 der Zigarettenpackungen 10, vgl. Fig. 3, werden im Rahmen einer mittels einer geeigneten Bildauswertesoftware durchgeführten Bildauswertung mit dem Referenzbild 18 verglichen.

In gleicher Weise können entsprechende tatsächliche bzw. Ist-Bilder der Rückseiten, der Oberseiten, der Unterseiten etc. der Packungen 10 jeweils mit entsprechenden Referenzbildern 18 verglichen werden. Natürlich können optisch auch nur Teile der Packungen 10 geprüft werden. Auch können Folienumhüllungen, in die die Packungen eingehüllt werden, geprüft werden, Papierzuschnitte, in denen Gruppen von Zigarettenpackungen (Stange) eingehüllt werden oder dergleichen mehr.

In dem vorliegenden Ausführungsbeispiel ist an der Packungsvorderseite 19 die Banderole 14 angeordnet. Des Weiteren verfügt die Packungsvorderseite 19 über ein erstes, als Schriftzug ausgebildetes Bildobjekt 23, sowie ein zweites, als graphisches Symbol dargestelltes Bildobjekt 24.

In Fig. 3 sind mögliche Fehler 25a-d der Packungsvorderseite 19 zu erkennen. So ist eine Ecke 25a der Banderole 14 abgerissen. 25b stellt einen Riss bzw. einen Knick in der oberen Kante der Packungsvorderseite 19 dar. Die Packungsvorderseite 19 selbst weist noch einen ähnlichen, weiteren Riss 25c auf. Schließlich ist auf der Packungsvorderseite 19 noch eine Verschmutzung zu erkennen, nämlich ein Tabakkrümel 25d.

Die aufgenommenen Bilder 20 werden im Rahmen des bereits angesprochenen Vergleichs von dem Referenzbild 18 subtrahiert. Das Ergebnis dieser Subtraktion, nämlich das Differenzbild 27, ist in Fig. 4 gezeigt. Gestrichelt ist zur besseren Orientierung in Fig. 4 zusätzlich die Kontur 26 der Packungsvorderseite 19 gezeigt, obgleich diese in dem Differenzbild 27 nicht vorhanden ist.

Wie zu erkennen ist, weist das Differenzbild 27 Differenzbildobjekte 28a-f auf. Diese Differenzbildobjekte 28a-f sind überall dort angeordnet, wo das Referenzbild 18 von dem aufgenommen Bild 20 abweicht.

Beispielsweise sind die (dunklen) Differenzbildobjekte 28a-d auf die Fehler 25a-d in dem aufgenommen Bild zurückzuführen.

Die Kontrastausbildung in den Bildern sämtlicher Fig. der vorliegenden Anmeldung (dunkle Bereiche/helle Bereiche) dient im Übrigen ausschließlich zur Verdeutlichung der Zusammenhänge. Bezogen auf Helligkeitswerte sind dagegen beispielsweise abweichend von der Darstellung in Fig. 4 tatsächlich regelmäßig diejenigen Bereiche des Differenzbildes 27, in denen das aufgenommene Bild 20 und das Referenzbild 18 identisch übereinstimmen, dunkler, während diejenigen Bereiche, in denen das aufgenommene Bild 20 und das Referenzbild 18 nicht übereinstimmen (Differenzbildobjekte 28a-f in Fig. 4) heller sind.

Das Differenzbild 27 kann nun beispielsweise durch die softwaregestützte Analyse der Helligkeitswerte einzelner Bildpunkte oder einzelner Bildpunktbereiche des Bildes 27 ausgewertet werden. Die Ermittlung von Bereichen, deren Helligkeitswerte beispielsweise nach vorbestimmten Kriterien deutlich von anderen Bereichen abweichen, oder die vorbestimmte Schwellwerte überschreiten oder erreichen, kann auf entsprechende Fehler der Packungsvorderseite 19 hindeuten.

Allerdings wird eine solche Analyse ohne weitere besondere Maßnahmen, die nachfolgend erläutert werden, in gewissen Situationen zu fehlerhaften Ergebnissen führen. Denn die im Differenzbild 27 zu erkennenden Differenzbildobjekte 28e, 28f resultieren ausschließlich aus einem räumlichen bzw. örtlichen Versatz zwischen der Anordnung der Bildobjekte 23, 24 in dem aufgenommenen Bild 20 relativ zu der Position der Bildobjekte 23, 24 in dem Referenzbild 18. Mit anderen Worten liegen diese Bildobjekte 23, 24 bei Überdeckung von aufgenommenem Bild 20 und Referenzbild 18 nicht unmittelbar übereinander, sondern sind seitlich leicht versetzt.

Dieser Versatz basiert darauf, dass produktionsbedingt die Position der Bildobjekte 23, 24 auf der Vorderseite 19 der Zigarettenpackung 10 schwankt, in der Regel um einen Mittelwert. In Fig. 3 ist die Position der entsprechenden Referenzbildobjekte 23, 24 des Referenzbildes 18 durch gestrichelte Linien dargestellt. Die Pfeile in Fig. 3 geben zudem die Richtung des seitlichen Versatzes zwischen Referenzbildobjekten 23, 24 und Bildobjekten 23, 24 an.

Der räumliche Versatz zwischen den Bildobjekten 23, 24 in dem Referenzbild 18 bzw. dem Aufnahmebild 20 resultiert im Ergebnis aus örtlichen bzw. räumlichen Schwankungen der Positionen der entsprechenden Bildobjekte 23, 24 auf den Vorderseiten 19 der Zigarettenpackungen 10. In der Regel werden die Zuschnitte, die zur Herstellung der Packungen 10 verwendet werden, und aus denen unter anderem die Vorderseiten 19 der Packungen 10 gebildet werden, bereits vor der Fertigung der Zigarettenpackungen 10 separat vorproduziert. Bei dem Druckvorgang der Bildobjekte 23, 24 entstehen die innerhalb einer Menge von Packungen 10 auftretenden, voneinander abweichenden bzw. relativ zur Vorderseite 19 schwankenden Positionen derselben.

Da die hieraus resultierenden Differenzbildobjekte 28e, 28f in Fig. 4 in dem Differenzbild 27 Bereiche mit besonderen Helligkeitswerten darstellen, würde die Helligkeitswertanalyse des Differenzbildes 27 diese ebenfalls als Fehler werten. Gewollt ist aber in der Regel, derartige Differenzbildobjekte 28e, 28f, die auf produktionsbedingten, statistisch erfassbaren Schwankungen beruhen, bestenfalls nur in Extremfällen als Fehler zu klassifizieren. Andernfalls würde ungewollt ein Großteil der Packungen 10 im Rahmen der Auswertung automatisch als fehlerhaft bewertet und anschließend aus dem Produktionsprozess ausgeschleust werden.

Durch geeignete Analysen einer Menge von Packungen 10 oder gegebenenfalls einer Menge von Zuschnitten, aus denen die Packungen 10 gefertigt werden, lässt sich die Wahrscheinlichkeit ermitteln, mit der das Druckbild bzw. das jeweilige Bildobjekt 23, 24 um eine durch das Referenzbild 18 vorgegebene Referenzposition schwankt bzw. versetzt zu dieser angeordnet ist.

Beispielsweise durch Analyse einer größeren Anzahl von von Musterpackungen 10 aufgenommenen Bildern können diese Positionsschwankungen zahlenmäßig in einer statistischen Verteilung erfasst werden. Zu diesem Zweck kann beispielsweise zunächst eine sogenannte Häufigkeitsverteilung ermittelt werden, das heißt eine Verteilung, die angibt, bei wie vielen Bildaufnahmen bezogen auf eine Gesamtanzahl von Bildaufnahmen die entsprechenden Bildobjekte 23, 24 an bestimmten Positionen angeordnet sind. Aus dieser Häufigkeitsverteilung wird dann die entsprechende Wahrscheinlichkeitsverteilung ermittelt.

Eine im Rahmen der vorliegenden Erfindung verwendbare statistische Verteilung kann, muss aber nicht in dieser Weise empirisch ermittelt werden. Grundsätzlich ist auch denkbar, auf im Wesentlichen theoretischen Überlegungen beruhende statistische Verteilungen heranzuziehen.

Besonders wichtig ist nun, dass die Bildinformationen, vorliegend die Helligkeitswerte, in denjenigen Bereichen des Differenzbildes 27, in denen erwartet wird, dass diese mindestens teilweise, gegebenenfalls vollständig, auf solchen statistisch erfassbaren Schwankungen beruhen, nicht aber auf Fehlern der zu prüfenden Packung, in besonderer Weise gewichtet werden.

Bei dem vorliegenden Beispiel würden die entsprechenden Helligkeitsinformationen des Differenzbildes 27 in denjenigen Bereichen, in denen die Differenzbildobjekte 28e, 28f zu erwarten sind, weniger stark gewichtet werden als die entsprechenden Bildinformationen in anderen Bereichen.

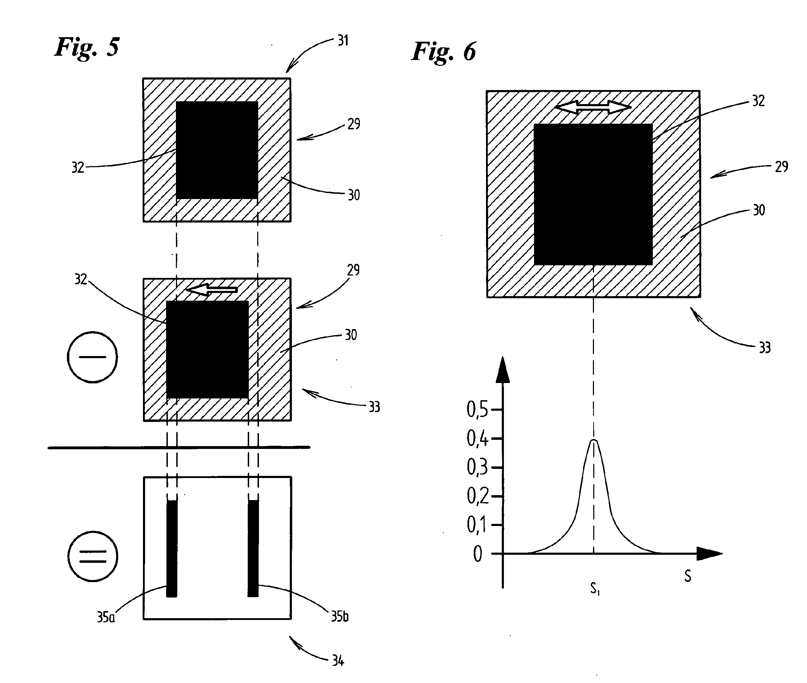

Eine Möglichkeit der Umsetzung eines Bildauswerteverfahrens mit einer solchen Gewichtung von Bildinformationen bzw. Helligkeitsinformationen wird anhand der Fig. 5-11 erläutert. Diese zeigen ein stark vereinfachtes Prüfobjekt 29, etwa eine Packungsseite, mit darauf angeordneten, aufgedrucktem Bildobjekt 32.

In Fig. 5 ist ein Referenzbild 31 des Prüfobjektes 29 gezeigt, das einen Hintergrund 30 aufweist, beispielsweise eine Packungsvorderseite, auf dem ein kastenförmiges Bildobjekt 32 angeordnet ist (oberes Bild).

Ein entsprechendes Prüforgan der Prüfvorrichtung nimmt von dem Prüfobjekt 29 im Betrieb ein Ist-Bild bzw. ein tatsächliches Bild 33 auf (mittleres Bild).

Dieses aufgenommene Bild 33 wird von dem Referenzbild 31 subtrahiert. Dieser Verfahrensschritt ist durch das Zeichen "-" symbolisiert.

Im Ergebnis wird ein Differenzbild 34 erzeugt (vgl. unteres Bild). Dieser Verfahrensschritt wird durch das Symbol "=" symbolisiert.

Wie in dem Differenzbild 34 zu erkennen ist, ist das gesamte Differenzbild weiß, allerdings sind zwei Differenzbildobjekte 35a, 35b zu erkennen, die aufgrund des Versatzes zwischen Referenzbild 31 und aufgenommenen Bild 33 entstanden sind.

In Fig. 6 ist ein Diagramm einer statistischen Wahrscheinlichkeitsverteilung des tatsächlichen Versatzes der Position des Bildobjektes 32 zu dem Hintergrund 30 aufgrund von produktionsbedingten Druckschwankungen gezeigt.

In dem Diagramm ist vorliegend auf der Abszisse ausgehend vom linken Rand des Hintergrundes 30 die jeweilige Lage S des Mittelpunkts bzw. der Mittellinie des Bildobjekts 32 aufgetragen bzw. deren jeweiliger Abstand von dem linken Rand des Hintergrundes 30. Auf der Ordinate sind bezogen auf die Positionen S Wahrscheinlichkeiten angegeben, mit denen der Mittelpunkt des Bildobjekts 32 an den entsprechenden Positionen S angeordnet ist.

Zu erkennen ist eine maximale Wahrscheinlichkeit der Lage der Bildobjektmittellinie im Bereich S₁.

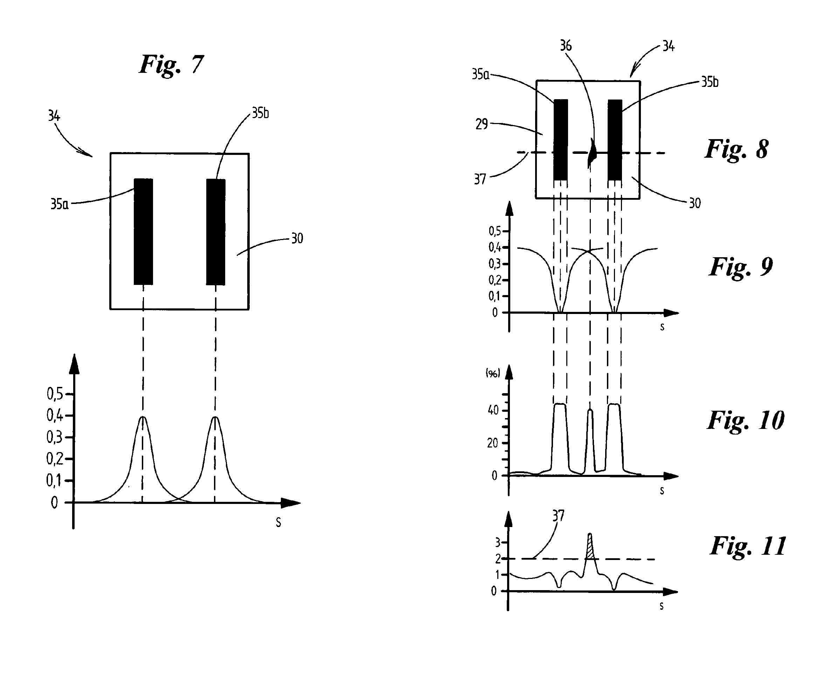

Analog hierzu sind in Fig. 7 entsprechende statistische Wahrscheinlichkeitsverteilungen der Positionen der Differenzbildobjekte 35a, 35b des Differenzbildes gezeigt. Klar erkennbar sind die Bereiche S, in denen die Differenzbildobjekte 35a, 35b jeweils mit besonders hoher Wahrscheinlichkeit auftreten.

In Fig. 8 ist ein auf einem anderen aufgenommen Bild 33 eines gleichartigen Prüfobjektes 29 beruhendes Differenzbild 34 gezeigt, bei dem zwischen den beiden Differenzbildobjekten 35a, 35b als Beispiel für einen Fehler ein auf einem Tabakkrümel basierendes Differenzbildobjekt 36 zu erkennen ist.

Im Rahmen der Auswertung des Differenzbildes 34 wird die statistische Wahrscheinlichkeitsverteilung der Positionen der Differenzbildobjekte 35a, 35b gemäß Fig. 7 rechnerisch negiert. Das Ergebnis dieser Negation ist in dem Diagramm in Fig. 9 dargestellt.

Entlang der in Fig. 8 gezeigten, gestrichelten Auswertelinie 37 erfolgt dann eine Auswertung der Helligkeitswerte der auf der Auswertelinie 37 liegenden Bildpunkte des Bildes 34. Eine solche Analyse kann für eine Vielzahl weiterer, örtlich versetzt verlaufender Auswertelinien 37 durchgeführt werden.

In Fig. 10 ist das Ergebnis dieser Helligkeitswertanalyse gezeigt. Auf der Ordinate sind bezogen auf einen Maximalwert Helligkeitswerte der jeweiligen, auf der Auswerteline 37 liegenden Bildpunkte in Prozent aufgetragen.

Zu erkennen sind die großen Helligkeitswerte bzw. Helligkeitswertmaxima an den Positionen S, an denen die Bildobjekte 35a, 35b sowie 36 angeordnet sind. Zwischen diesen Helligkeitswertmaxima sind die Helligkeitswerte deutlich kleiner bzw. minimal, das heißt, das Differenzbild 34 ist dort nahezu schwarz.

Die negierte statistische Verteilung gemäß Fig. 9 sowie der Helligkeitswertverlauf gemäß Fig. 10 werden im nächsten Auswerteschritt wertmäßig miteinander multipliziert.

Das Ergebnis ist der Kurvenverlauf, der in dem Diagramm in Fig. 11 dargestellt ist. Die genannte Multiplikation entspricht letztlich einer erfindungsgemäßen, geringeren Gewichtung derjenigen Bereiche, in denen die Differenzobjekte 35a, 35b angeordnet sind. Die Gewichtung erfolgt demnach derart, dass der Einfluss der Bildinformationen, vorliegend der Helligkeitswerte, auf die Auswertung des Bildes 34 in diesen Bereichen geringer ist als beispielsweise der Einfluss der Helligkeitswerte des Bereichs, in dem das Differenzbildobjekt 36 angeordnet ist.

In Fig. 11 ist als gestrichelte Linie 37 ein Schwell- oder Grenzwert dargestellt. Die Prüfvorrichtung erkennt die (gewichteten) Helligkeitswerte als fehlerhaft, insofern dieser Schwellwert erreicht oder überschritten wird. Zu erkennen ist, dass durch die Gewichtung der auf den Bildobjekten 35a, 35b basierenden Helligkeitswerte der Schwellwert in diesen Bereichen nicht erreicht wird. Mithin werden die Differenzobjekte 35a, 35b richtigerweise nicht als Fehler eingestuft.

Anders ist dies bei den auf dem Bildobjekt 36 (Tabakkrümel) resultierenden Helligkeitswerten. Diese liegen aufgrund einer deutlich größeren Gewichtung oberhalb des Schwellwertes 37. Mithin wird das Bildobjekt 36 als Fehler erkannt.

### Bezugszeichenliste:

- 10: Packung
- 11: Kamera
- 12: Trockenrevolver
- 13: Ausschleuseeinrichtung
- 14: Banderole
- 15: Fördertrum
- 16: Ausschleuserad
- 17: Zigarettenförderer
- 18: Referenzbild
- 19: Vorderseite
- 20: aufgenommenes Bild
- 23: Bildobjekt
- 24: Bildobjekt
- 25a: Fehler
- 25b: Fehler
- 25c: Fehler
- 25d: Fehler
- 26: Kontur
- 27: Differenzbild
- 28a: Differenzbildobjekt
- 28b: Differenzbildobjekt
- 28c: Differenzbildobjekt
- 28d: Differenzbildobjekt
- 28e: Differenzbildobjekt
- 28f: Differenzbildobjekt
- 29: Prüfobjekt

- 30: Hintergrund
- 31: Referenzbild
- 32: Bildobjekt
- 33: aufgenommenes Bild
- 34: Differenzbild
- 35a: Differenzbildobjekt
- 35b: Differenzbildobjekt
- 36: Fehlerelement
- 37: Linie

- S: Position
- S₁: Position

## Patentansprüche

1. Verfahren zum optischen Prüfen von bei der Herstellung und/oder Verpackung von Zigaretten zu prüfenden Objekten - Prüfobjekte -, insbesondere von Zigarettenpackungen (10) und/oder Zuschnitten für Zigarettenpackungen und/oder Aufdrucken und/oder Druckträgern auf oder für Zigarettenpackungen, bei dem mittels eines Prüforgans (11), bevorzugt einer Kamera, ein elektronisches Bild mindestens eines Prüfobjektes (10, 19, 29) aufgenommen wird, und bei dem zwischen dem aufgenommenem Bild (20, 33) und einem hinterlegten Referenzbild (18, 31) ein Differenzbild (27, 34) gebildet wird, wobei Bildinformationen des Differenzbildes (27, 34) im Hinblick auf Fehler des Prüfobjektes (10, 19, 29) ausgewertet werden, **dadurch gekennzeichnet, dass** im Rahmen der Auswertung des Differenzbildes (27, 34) in mindestens einem Bildbereich des Differenzbildes (27, 34) eine vorzugsweise positionsabhängige Gewichtung der Bildinformationen dieses Bildbereichs erfolgt.

2. Verfahren gemäß Anspruch 1, **dadurch gekennzeichnet, dass** die Gewichtung in einem Bildbereich erfolgt, in dem Bildinformationen erwartet werden, die auf innerhalb einer Menge von gleichartigen Prüfobjekten (10, 19, 29) auftretende, statistisch erfassbare, insbesondere produktionsbedingte Schwankungen zurückzuführen sind.

3. Verfahren gemäß Anspruch 1 oder 2, **dadurch gekennzeichnet, dass** die Gewichtung der Bildinformationen in dem mindestens einen Bereich nach Maßgabe einer vorzugsweise positionsabhängigen statistischen Verteilung erfolgt, insbesondere nach Maßgabe einer statistischen Verteilung der erwarteten Positionen mindestens eines in dem Bereich angeordneten, vorzugsweise aufgedruckten Differenzbildobjektes (28e, f; 35a, b) in dem Differenzbild (27, 34).

4. Verfahren gemäß Anspruch 3, **dadurch gekennzeichnet, dass** die statistische Verteilung der erwarteten Positionen des Differenzbildobjektes (28a, f; 35a, b) in dem Differenzbild (27, 34) in dem genannten Bildbereich vorzugsweise automatisch ermittelt wird, wobei die Ermittlung folgende Schritte umfasst:
- zu jedem Musterprüfobjekt einer Menge von gleichartigen Musterprüfobjekten, insbesondere von mindestens 50 solcher Musterprüfobjekte, wird wenigstens ein Bild des Musterprüfobjektes mit mindestens einem auf diesem sowie sämtlichen weiteren Musterprüfobjekten angeordneten, insbesondere aufgedruckten Bildobjekt aufgenommen,
- zu jedem aufgenommenen Bild wird aus dem aufgenommen Bild und einem Referenzbild, das ein dem Bildobjekt des aufgenommen Bildes entsprechendes Referenzbildobjekt aufweist, ein Differenzbild mit einem sich aus der Differenz von Bildobjekt und Referenzbildobjekt ergebendem Differenzbildobjekt ermittelt,
- aus der Menge an Differenzbildern werden die Positionen der jeweiligen Differenzbildobjekte in den jeweiligen Differenzbildern ermittelt,
- zu den auf diese Weise ermittelten Positionen wird jeweils die Häufigkeit bestimmt, mit der die jeweiligen Differenzbildobjekte jeweils an der entsprechenden Position in dem jeweiligen Differenzbild angeordnet sind.

5. Verfahren gemäß mindestens Anspruch 3, **dadurch gekennzeichnet, dass** die Gewichtung der Bildinformationen nach Maßgabe der statistischen Verteilung der erwarteten Positionen des Differenzbildobjektes (28a, f; 35a, b) in dem Differenzbild (27, 34) derart erfolgt, dass die Bildinformationen an den Bildpositionen des genannten Bereichs, an denen das Differenzbildobjekt (28a, f; 35a, b) bzw. ein Teil desselben mit höherer Wahrscheinlichkeit auftritt, weniger stark gewichtet werden, als an den Positionen, an denen das Bildobjekt (28a, f; 35a, b) bzw. ein Teil desselben mit geringerer Wahrscheinlichkeit auftritt.

6. Verfahren gemäß einem oder mehreren der weiteren Ansprüche, **dadurch gekennzeichnet, dass** die gewichteten Bildinformationen des Differenzbildes (27, 34) in dem genannten Bereich, insbesondere bereichsweise oder auf Bildpunktebene, mit einem Schwellenwert (37) verglichen werden, und dass bei Erreichen oder Überschreiten des Schwellenwertes (37) das Differenzbild (27, 34) bzw. das Prüfobjekt (10, 19, 29) als fehlerhaft bewertet wird.

7. Verfahren gemäß einem oder mehreren der weiteren Ansprüche, **dadurch gekennzeichnet, dass** das Referenzbild vorzugsweise automatisch ermittelt wird, indem von jedem Musterprüfobjekt einer Menge von gleichartigen Musterprüfobjekten, insbesondere von mindestens 50 solcher Musterprüfobjekte, wenigstens ein Bild des Musterprüfobjektes aufgenommen wird, und wobei aus der Menge von aufgenommenen Bildern, vorzugsweise mittels eines geeigneten statistischen Auswerteverfahrens, ein das Referenzbild bildendes Durchschnittsbild erzeugt wird.

8. Vorrichtung zum optischen Prüfen von bei der Herstellung und/oder Verpackung von Zigaretten zu prüfenden Objekten - Prüfobjekte -, insbesondere von Zigarettenpackungen und/oder Zuschnitten für Zigarettenpackungen und/oder Aufdrucken und/oder Druckträgern auf oder für Zigarettenpackungen, insbesondere zur Durchführung des Verfahrens gemäß Anspruch 1, mit einem Prüforgan (11), bevorzugt einer Kamera, mit dem ein elektronisches Bild mindestens eines Prüfobjektes (10, 19, 29) aufnehmbar ist, und mit einer Auswerteeinrichtung, mit der zwischen dem aufgenommenem Bild (20, 33) und einem hinterlegten Referenzbild (18, 31) ein Differenzbild (27, 34) ermittelbar ist, und mit der Bildinformationen des Differenzbildes (27, 34) im Hinblick auf Fehler des Prüfobjektes (10, 19, 29) auswertbar sind, insbesondere auf Fehler des Prüfobjektes (10, 19, 29), **dadurch gekennzeichnet, dass** die Auswerteeinrichtung derart ausgebildet ist, dass sie im Rahmen der Auswertung des Differenzbildes (27, 34) in mindestens einem Bildbereich eine vorzugsweise positionsabhängige Gewichtung der Bildinformationen dieses Bildbereichs vornehmen kann.
